**Europäisches Patentamt**

**European Patent Office**

**Office européen des brevets**

(19)

(11) Veröffentlichungsnummer : **0 354 567 B1**

(12) # EUROPÄISCHE PATENTSCHRIFT

(45) Veröffentlichungstag der Patentschrift :
**14.12.94 Patentblatt 94/50**

(51) Int. Cl.$^5$ : **H04B 10/24**

(21) Anmeldenummer : **89114799.3**

(22) Anmeldetag : **10.08.89**

(54) Sende/Empfangsteil für ein bidirektionales kohärent-optisches übertragungssystem.

(30) Priorität : **11.08.88 DE 3827228**

(43) Veröffentlichungstag der Anmeldung :
**14.02.90 Patentblatt 90/07**

(45) Bekanntmachung des Hinweises auf die
Patenterteilung :
**14.12.94 Patentblatt 94/50**

(84) Benannte Vertragsstaaten :
**AT BE CH DE ES FR GB IT LI NL SE**

(56) Entgegenhaltungen :
**EP-A- 0 222 384**
**PATENT ABSTRACTS OF JAPAN, Band 9, Nr.**
**102 (E-312)[1825], 4. Mai 1985; & JP-A-59 227**
**180 (FUJITSU) 20-12-1984**
**ELECTRONICS LETTERS, Band 23, Nr. 12, 4.**
**Juni 1987, Seiten 649-651, Stevenage, Herts,**
**GB; H.J. WESTLAKE et al.: "Bidirectional and**
**two-channel transmission system measure-**
**ments using a semiconductor-laser-amplifier**
**repeater"**

(73) Patentinhaber : **Alcatel SEL**
**Aktiengesellschaft**
**Lorenzstrasse 10**
**D-70435 Stuttgart (DE)**
(84) **DE**
Patentinhaber : **ALCATEL N.V.**
**Strawinskylaan 341,**
**(World Trade Center)**
**NL-1077 XX Amsterdam (NL)**
(84) **BE CH ES FR GB IT LI NL SE AT**

(72) Erfinder : **Veith, Gustav, Dr.**
**Münchinger Strasse 22**
**D-7254 Hemmingen (DE)**

(74) Vertreter : **Kugler, Hermann, Dipl.-Phys. et al**
**Alcatel SEL AG**
**Patent- und Lizenzwesen**
**Postfach 30 09 29**
**D-70449 Stuttgart (DE)**

EP 0 354 567 B1

## Beschreibung

Die vorliegende Erfindung bezieht sich auf ein Sende/Empfangsteil für ein Übertragungssystem nach dem Oberbegriff des Anspruchs 1.

Ein Sende/Empfangsteil mit den dort angegebenen Merkmalen ist bekannt aus der EP-A-0 222 384. Deren Fig. 2 zeigt ein Sende/Empfangsteil mit einem einzigen Laser, der sowohl zum Aussenden einer Signalträgerwelle als auch zum Aussenden einer Oszillatorstrahlung für den kohärent-optischen Überlagerungsempfänger desselben Sende/Empfangsteils, d.h. als sogenannter "local oscillator", verwendet ist. Der Laser ist ein in zwei Austrittsrichtungen emittierender Laser. Sein einer Teilstrahl wird mittels eines Kopplers (optical combiner 3) in den zum kohärent-optischen Überlagerungsempfänger führenden Lichtwellenleiter eingekoppelt, und sein anderer Teilstrahl wird zum Aussenden einer Signalträgerwelle über denselben Koppler in denselben Lichtwellenleiter in Richtung zur entfernten Gegenstelle eingekoppelt.

Die Frequenz des im Überlagerungsempfänger entstehenden Zwischenfrequenzsignals ist fest vorgegeben, in dem erläuterten Beispiel 600 MHz, und auch die optische Frequenz der von dem Laser in den Lichtwellenleiter eingegebenen Teilstrahlen wird abhängig von der vorgegebenen Zwischenfrequenz, auf einen festen Wert geregelt, so daß mit dem optischen Überlagerungsempfänger nur Signale mit einer einzigen, fest vorgegebenen optischen Frequenz empfangen werden können.

Weil durch den einzigen Koppler 3, mit dem beide optischen Ausgänge des Lasers verbunden sind, ein ringförmiger Oszillatoraufbau gegeben ist, in dem Probleme mit Resonanzoszillationen auftreten, sind optische Isolatoren in dem ringförmigen Aufbau vorhanden und auch notwendig. Da dies sehr teure optische Bauelemente sind, hat das bekannte Sende/Empfangsteil den Nachteil von beträchtlich hohen Kosten. Dies ist um so mehr ein Nachteil, als die Empfangsfrequenz des optischen Überlagerungsempfängers auf eine einzige optische Frequenz fest eingestellt ist und es somit nicht möglich ist, durch Abstimmung des Empfängers eine beliebige optische Frequenz aus einem breiten Band von Frequenzen zu empfangen.

Die Aufgabe der vorliegenden Erfindung ist es daher, ein Sende/Empfangsteil für ein bidirektionales kohärent-optisches Übertragungssystem der eingangs genannten Art anzugeben, das kostengünstiger herstellbar als das bekannte ist und das Leistungsmerkmal aufweist, daß die Sende- und Empfangsfrequenz frei wählbar und die Empfangsfrequenz auf eine beliebige Frequenz aus einem Band von Frequenzen einstellbar ist, so daß ein kohärentes bidirektionales Vielkanalsystem realisiert werden kann.

Diese Aufgabe wird mit den im Anspruch 1 angegebenen Merkmalen gelöst.

In C.G. Atkins et al "Application of Brillouin amplification in coherent optical transmission", Electron. Lett., Vol. 22, Nr. 10, Mai 1986, S. 556 - 558 ist gezeigt, wie die in einem Einmoden-Lichtwellenleiter laufende Signalwelle dadurch zu verstärken ist, daß ein schmalbandiges Pumplicht in einem definierten Frequenzabstand entgegengesendet wird. Da man so mit einer relativ niedrigen optischen Pumpleistung von einigen mW in typischen Einmoden-Lichtwellenleitern von 30 km Länge eine optische Verstärkung von schmalbandigen optischen Wellen um nahezu 50 dB erreichen kann, bedeutet dies bei heute erreichbaren Lichtwellenleiter-Dämpfungen von 0,2 dB/km (bei 1,55 um Wellenlänge) eine Ausdehnung der Übertragungslänge um über 100 km.

Um auch für einen solchen Einsatz eine konstruktiv kompaktere, technologisch einfachere und wesentlich kostengünstigere Ausführung eines Sende/Empfangsteils zu erreichen, sind gemäß einer anderen Ausführungsform vorliegender Erfindung die im Anspruch 2 angegebenen Merkmale vorgesehen.

Da der im Sende/Empfangsteil vorgesehene Sendelaser neben seiner Funktion zum Aussenden einer Signalträgerwelle und/oder seiner Funktion zum Aussenden einer Oszillatorstrahlung für den kohärenten Überlagerungsempfänger in zweiter oder dritter Hinsicht zur optischen Verstärkung der ankommenden Signalwelle, also als Pumplaser für eine selektive optische Verstärkung von Signalwellen eingesetzt werden kann, ist es darüber hinaus möglich, insbesondere bei kohärent-optischen Vielkanal-Übertragungssystemen, den Aufbau von ansonsten äußerst kostenintensiven und technisch komplexen elektro/optischen bzw. optisch/elektrischen Regeneratorkomponenten einzusparen. Wenn sich auch noch nicht ganz abschätzen läßt, in welcher Größenordnung sich dieser Aufwand reduzieren läßt, da vergleichbare Regeneratorkomponenten in kohärent-optischen Übertragungssystemen bisher noch nicht realisiert worden sind, ergibt sich dennoch eine Vereinfachung und Kostenreduzierung allein schon deshalb, weil hierdurch auch ein schmalbandiger frequenzstabilisierter Laser eingespart werden kann.

Mit den Merkmalen des Anspruchs 2, auch in Verbindung mit denen des Anspruchs 5 und auch in Verbindung mit denen des Anspruchs 13, ist eine Ausführungsform erreicht, die sich insbesondere als Empfangsmodul hoher Empfindlichkeit für kohärent-optische Übertragungssysteme eignet. Wegen der effektiven faseroptischen Brillouin-Verstärkung kann auf eine aufwendige elektronische Nachverstärkung verzichtet werden und möglicherweise eine nur durch Quantenrauschen begrenzte Empfängerempfindlichkeit erreicht werden.

Die beiden Teilstrahlen können in vorteilhafter Weise entweder wie bei dem genannten bekannten System oder gemäß den Merkmalen des Anspruchs 3 erzeugt werden.

Weitere vorteilhafte Ausgestaltungen der Erfindung ergeben sich aus den Merkmalen der vorstehend nicht erwähnten Unteransprüche.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:

Fig. 1 in schematischer Darstellung ein Sende/Empfangsteil für ein bidirektionales kohärent-optisches Übertragungssystem gemäß einem Ausführungsbeispiel vorliegender Erfindung,

Fig. 2 in schematischer Darstellung ein Sende/Empfangsteil für ein bidirektionales kohärent-optisches Übertragungssystm gemäß einem anderen Ausführungsbeispiel vorliegender Erfindung, und

Fig. 3a bis 3c in schematischer Darstellung die Frequenzlage der kohärent- optischen Übertragungskanäle (a) bzw. der optischen Emissionsfrequenzen eines Lasers beim Einsatz in einem Sende/Empfangsmodul (b) bzw. in einem Verstärker/Empfangsmodul (c).

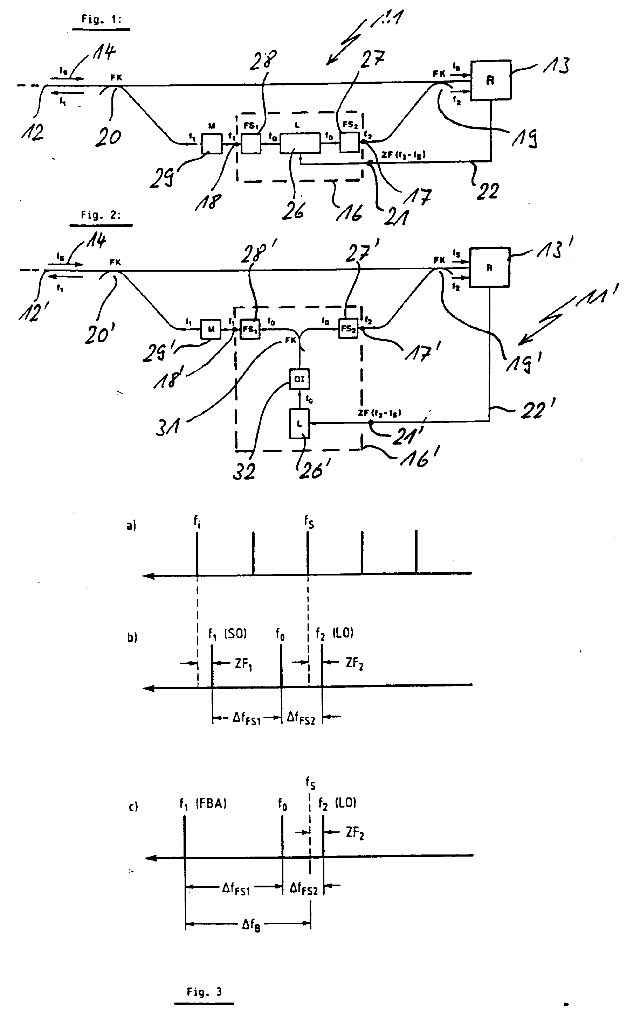

Die Figuren 1 bis 2 zeigen in zwei Ausführungsbeispielen ein Sende/Empfangsteil 11 bzw. 11' für ein bidirektionales kohärent-optisches Übertragungssystem, also eine Einrichtung bzw. Einheit, die sowohl zum Aussenden als auch zum Empfangen von Nachrichten über einen Lichtwellenleiter 12 bzw. 12' als Übertragungsstrecke des Übertragungssystems geeignet ist. Vorab sei noch erwähnt, daß vom Sende/Empfangsteil 11 und 11' in Fig. 1 bzw. 2 nur diejenigen Bauelemente dargestellt sind, die unmittelbar die Erfindung betreffen, daß also weder der Modulator noch der Demodulator noch die elektro-optischen bzw. opto-elektrischen Wandlerelemente und dgl. weiterhin übliche Bauelemente eines derartigen Sende/Empfangsteils dargestellt sind.

Gemäß Fig. 1 besitzt der Sende/Empfangsteil 11 einen Empfänger 13 für kohärenten Überlagerungsempfang. Der Empfänger 13 empfängt aus dem Lichtwellenleiter 12 eine Signalwelle 14 mit einer Frequenz $f_S$, die aufgrund einer üblichen Modulation eine Nachricht enthält und die von einem nicht dargestellten vorzugsweise identischen Sende/Empfangsteil ausgesendet ist. Die Modulationsart kann dabei eine der in der Nachrichtentechnik üblichen Modulationsarten wie Amplitudenmodulation, Frequenzmodulation, Phasenmodulation oder dgl. sein. Der Sende/Empfangsteil 11 besitzt ferner einen Modul 16, dessen einer Ausgang 17 über einen ersten Lichtwellenleiter-Koppler 19, auch Faserkoppler (FK) genannt, in Richtung der vom Lichtwellenleiter 12 ankommenden Signalwelle 14 in den Lichtwellenleiter 12 vor dessen Einmünden in den Überlagerungsempfänger (R) 13 eingekoppelt ist und dessen zweiter Ausgang 18 über einen zweiten Lichtwellenleiter-Koppler (FK) 20 in einer Richtung entgegen der empfangenen Signalwelle 14 in die den Lichtwellenleiter 12 eingekoppelt ist. Ein Eingang 21 des Moduls 16 ist über eine Leitung 22 mit einem Ausgang des Überlagerungsempfängers 13 verbunden.

Der Modul 16 besitzt einen schmalbandigen Laser (L) 26, der in zwei Austrittsrichtungen eine Strahlung mit der Grundfrequenz $f_0$ emittiert. Der Laser 26 ist beispielsweise ein zweiseitig emittierender Laser. Der eine Teilstrahl mit der Grundfrequenz $f_0$ wird durch einen Frequenzverschieber (FS2) 27 geleitet, in welchem seine Frequenz zu einer Frequenz $f_2$ verschoben wird, die beispielsweise geringer ist als die Grundfrequenz $f_0$. Der andere Teilstrahl mit der Grundfrequenz $f_0$ wird über einen Frequenzverschieber (FS1) 28 geleitet, durch den er eine Frequenz $f_1$ erhält, die höher ist als die Grundfrequenz $f_0$. Dieser frequenzverschobene andere Teilstrahl wird über einen externen Modulator (M) 29 geleitet und von dort dem zweiten Lichtwellenleiter-Koppler 20 zugeführt. Die Frequenzverschieber 27, 28 können jeweils durch einen integriert-optischen Modulator gebildet sein. Statt der Lichtwellenleiter-Koppler können auch andere optische Koppler verwendet werden. Wie Fig. 1 noch zu entnehmen ist, ist die mit dem Ausgang des Überlagerungsempfängers 13 verbundene Leitung 22 mit dem Laser 26 verbunden.

Das Sende/Empfangsteil 11' gemäß Fig. 2 unterscheidet sich vom Sende/Empfangsteil 11 der Fig. 1 durch den Aufbau seines Moduls 16', der unterschiedlich zum Modul 16 der Fig. 1 ist. Somit besitzt der Sende/Empfangsteil 11' ebenfalls einen Empfänger (R) 13' für kohärenten Überlagerungsempfang, der von einer Lichtwellenleiter-Übertragungsstrecke 12' die einlaufende, die Nachricht aufgrund ihrer Modulation enthaltende Signalwelle 14 der Frequenz $f_S$ empfängt, und ferner zwei Lichtwellenleiter-Koppler (FK) 19' und 20', die in derselben Weise wie die Lichtwellenleiter-Koppler 19 und 20 in Fig. 1 angeordnet sind und die mit dem ersten bzw. zweiten Ausgang 17', 18' des Moduls 16' verbunden sind. Zwischen dem Empfänger 13' und einem Eingang des Moduls 16' verläuft ebenfalls eine Leitung 22'.

Der Modul 16' gemäß Fig. 2 hat ebenfalls einen schmalbandigen Laser (L) 26', der jedoch nur einseitig eine Strahlung mit der Grundfrequenz $f_0$ emittiert. Zwischen dem Laser 26' und einem Strahlteiler (FK) 31 ist ein optischer Isolator (OI) 32 vorgesehen. Der Strahlteiler 31 bewirkt eine Aufteilung der vom Laser 26' emittierten Strahlung in einen ersten und einen zweiten Teilstrahl der Grundfrequenz $f_0$. Wie beim Ausführungsbeispiel der Fig. 1 werden die beiden Teilstrahlen über jeweils einen Frequenzverschieber FS2, FS1) 27' bzw. 28' geleitet, an dessen jeweiligem Ausgang ein frequenzverschobener Teilstrahl mit der Frequenz $f_2$ bzw. $f_1$ erscheint. Der eine Teilstrahl mit der Frequenz $f_2$ wird zum ersten Lichtwellenleiter-Koppler 19' geleitet, während der andere Teilstrahl mit der Frequenz $f_1$ über einen externen Modulator 29' zum zweiten Lichtwellenleiter-Koppler 20' geleitet wird. Ein Eingang des Lasers 26' ist mit der vom Empfänger 13' kommenden Leitung 22' verbunden.

Der Modul 16 oder 16' und dessen Laser 26 bzw. 26' wird gemäß vorliegender Erfindung beim Sende/Empfangsteil 11, 11' in multifunktionaler Weise eingesetzt:

Der vom Frequenzverschieber 27, 27' kommende Teilstrahl mit der Frequenz $f_2$ wird in Richtung der Signalwelle mit der Frequenz $f_S$ über den Koppler 19, 19' in den Empfänger 13, 13' für einen homodynen oder heterodynen, kohärenten Überlagerungsempfang eingespeist. Fig. 3a zeigt in diesem Zusammenhang mögliche kohärent-optische Übertragungskanäle bestimmter Frequenz, von denen hier beispielsweise der Kanal mit der Frequenz $f_S$, unterhalb welcher die Frequenz $f_2$ des eingespeisten Teilstrahls vom Laser 26, 26' liegt, dargestellt ist.

Damit dient der Laser 26, 26' über seinen einen Teilstrahl mit der Frequenz $f_2$ als Lokaloszillator-Laser, wie er sonst als separates Bauteil Verwendung findet.

Zweitens dient der Laser 26, 26' mittels des in Gegenrichtung zur Signalwelle $f_S$, die vom entfernten Sende/Empfangsteil ankommt, in den Lichtwellenleiter 12, 12' eingekoppelten anderen Teilstrahls mit der Frequenz $f_1$ zur Signalübertragung zu einem entfernten Empfänger, d.h. als Sendeoszillator-Laser. Dieser andere Teilstrahl mit der Frequenz $f_1$ kann dabei im externen Modulator 29, 29' in bekannter Weise mit einer Nachricht moduliert werden.

Wird der Modul 16, 16' in der Weise verwendet, daß gemäß den beiden o.g. Möglichkeiten der Laser 26, 26' als Sendeoszillator-Laser (SO) und gleichzeitig als Lokaloszillator-Laser (LO) verwendet wird, so ist in dieser Konfiguration gemäß Teilfigur 3b die Frequenz $f_2$ geringer als die Frequenz $f_S$ des einen Übertragungskanals und die Frequenz $f_1$ geringer als die Frequenz $f_i$ eines anderen Übertragungskanals. Dabei liegt die Grundfrequenz $f_0$ der vom Laser 26, 26' emittierten Strahlung zwischen den Frequenzen $f_1$ und $f_2$ der beiden Teilstrahlen. Die Frequenzregelung des in diesem Falle zweifach funktionalen Lasermoduls 16, 16', über die Leitung 22, 22', die den Empfänger 13 zum Laser 26, 26' rückkoppelt, erfolgt beispielsweise beim heterodynen Empfang über eine Zwischenfrequenzregelung oder ein anderes bekanntes Verfahren. Dabei wird die Frequenz $f_2$ des ersten Teilstrahls bezüglich der Frequenz $f_S$ der Signalwelle (oder bezüglich einer definierten Referenzfrequenz $f_R$) stabilisiert. Da die Frequenzen $f_1$ und $f_2$ der phasenverschobenen Teilstrahlen durch elektrische Modulation der Frequenz $f_0$ durch die Frequenz-Verschieber 28, 27 bzw. 28', 27', die beispielsweise elektrooptische Modulatoren sind, erzeugt werden, wobei

$$\Delta f_{FS2} = /f_2 - f_0/$$
$$\Delta f_{FS1} = /f_1 - f_0/$$

gilt, sind mit der Frequenz $f_2$ des einen Teilstrahls automatisch auch die Grundfrequenz $f_0$ des Lasers und die Frequenz $f_1$ des anderen Teilstrahles festgelegt. Durch die elektrische Ableitung der Frequenzen $f_1$ und $f_2$ von der Grundfrequenz $f_0$ lassen sich diese Frequenzen $f_1$ und $f_2$ auf jede Frequenz $f_i$ eines Übertragungskanals des kohärent-optischen Übertragungssystems festlegen, vorausgesetzt, daß diese innerhalb der Modulationsbandbreite der Frequenzverschieber 27, 28 bzw. 27', 28' liegt.

Drittens kann der Modul 16, 16' und der Laser 26, 26' über seinen Teilstrahl mit der Frequenz $f_1$ dazu verwendet werden, die in dem Einmoden-Lichtwellenleiter 12, 12' laufende Signalwelle mit der Grundfrequenz $f_S$ zu verstärken, indem dieser Signalwelle ein schmalbandiges Pumplicht dieser Frequenz $f_1$ mit einem definierten Frequenzabstand $\Delta f_B$ von der Frequenz $f_S$:

$$\Delta f_B = f_1 - f_S$$

entgegengesendet wird. Dabei wird $\Delta f_B$ als Brillouinfrequenz-Shift bezeichnet und kann beispielsweise bei 1,5 μm Lichtwellenlänge 11,2 GHz betragen ( $\Delta f_B$ ist abhängig von der Lichtwellenlänge).

Wird der Modul 16, 16' in einer Konfiguration betrieben, in der er die Funktionen der erstgenannten und der letztgenannten Möglichkeiten vereinigt, also als Lokaloszillator-Laser (LO) und gleichzeitig als Faser-Brillouin-Verstärker (FBA) wirkt bzw. eingesetzt wird, ergibt sich die in der Teilfigur 3c dargestellte Frequenzkonfiguration. Über die Zwischenfrequenz

$$ZF_2 = f_2 - f_S$$

wird die Signalwelle der Frequenz $f_S$ demoduliert. Gleichzeitig wird sie mit der Frequenz $f_S$ über die Pumpwelle bzw. den einen Teilstrahl mit der Frequenz $f_1$ mittels stimulierter Brillouin-Rückwärtsstreuung optisch verstärkt. Dabei gilt

$$\Delta f_B = (f_1 - f_0) + (f_0 - f_2) - (f_S - f_2)$$
$$\Delta f_B = f_{FS1} + f_{FS2} - ZF_2,$$

wobei

$\Delta f_B$    = dem Brillouinfrequenzshift (11,2 GHz bei 1,5 μm Wellenlänge)

$ZF_2$    = der Zwischenfrequenz bei optischem Heterodynempfang

$f_{FS1,2}$    = der Frequenzverschiebung bezüglich $f_0$

entsprechen.

Da $\Delta f_B$ relativ groß ist, ist es wegen der HF-Begrenzung der Frequenz-Verschieber erforderlich, daß die Vorzeichen von $\Delta f_{FS1}$ und $\Delta f_{FS2}$ verschieden gewählt werden. Da das zu verstärkende Signal längerwellig ist (Stokes shift), muß die Pumpwelle mit der Frequenz $f_1$ auf der Seite höherer Frequenzen bezüglich der Frequenz $f_S$ der Signalwelle und der Grundemissionsfrequenz $f_0$ des Lasers 26, 26′ gelegt werden.

Es ist auch möglich, den Modul 16, 16′ gleichzeitig für alle drei oben genannten Funktionsweisen, also sowohl als Sendeoszillator-Laser als auch als Lokaloszillator-Laser als auch als Faser-Brillouin-Verstärker einzusetzen. Dies kann beispielsweise in der Weise erfolgen, daß der Teilstrahl mit der Frequenz $f_1$ nochmals mit Hilfe eines Strahlenteilers unterteilt wird. Bevorzugterweise wird jedoch der Teilstrahl mit der Frequenz $f_1$ wechselweise zum Senden einer Signalwelle mit der Frequenz $f_1$ oder zur optischen Verstärkung der vom entfernt liegenden Sende/Empfangsteil kommenden Signalwelle mit der Frequenz fS eingesetzt. Auf diese Weise ergibt sich ein dreifach funktionaler Lasermodul 16, 16′.

In nicht dargestellter Weise können zumindest einige der Komponenten des Sende/Empfangsteils 11, 11′ in hybrider Form vorliegen und über optische Wellenleiter miteinander verknüpft werden. Außerdem ist es möglich, zumindest einige der Komponenten des Sende/Empfangsteils 11, 11′ einschließlich der optischen Leiter in monolithisch-integrierter Form auf einem elektrooptischen Substrat zu einigen.

## Patentansprüche

1. Sende/Empfangsteil für ein einen Lichtwellenleiter als Übertragungsmedium enthaltendes bidirektionales kohärent-optisches Übertragungssystem, mit einem Laser zum Aussenden einer Signalträgerwelle und einem Modulator, mit einem kohärent-optischen Überlagerungsempfänger und einem Demodulator, wobei der Laser auch zum Aussenden einer Oszillatorstrahlung für den kohärent-optischen Überlagerungsempfänger desselben Sende/Empfangsteils verwendet ist, **dadurch gekennzeichnet,** daß er einen ersten Koppler (19, 19′) enthält, um einen ersten Teilstrahl des Lasers (26, 26′) in Richtung der von einem entfernten Sende/Empfangsteil kommenden Signalwelle in den kohärent-optischen Überlagerungsempfänger (13, 13′) einzukoppeln, und einen zweiten Koppler (20. 20′), um einen zweiten Teilstrahl des Lasers (26, 26′) in Gegenrichtung zu der vom entfernten Sende/Empfangsteil kommenden Signalwelle in den Lichtwellenleiter (12, 12′) einzukoppeln.

2. Sende/Empfangsteil nach Anspruch 1, dadurch gekennzeichnet, daß der Laser (26, 26′) gleichzeitig zur optischen Verstärkung der von einem entfernten Sende/Empfangsteil (11, 11′) über den Lichtwellenleiter (12, 12′) ankommenden Signalwelle verwendet ist.

3. Sende/Empfangsteil nach Anspruch 1 oder 2, dadurch gekennzeichnet, daß der Laser (26′) ein unidirektional emittierender Laser ist, dessen Strahl in mindestens zwei Teilstrahlen unterteilbar ist.

4. Sende/Empfangsteil nach einem der vorhergehenden Ansprüche, dadurch gekennzeichnet, daß im Wege der vom Laser (26, 26′) emittierten Strahlung bzw. deren Teilstrahlen mindestens eine frequenzverschiebende Komponente (27, 28; 27′, 28′) angeordnet ist.

5. Sende/Empfangsteil nach einem der Ansprüche 2 bis 4, dadurch gekennzeichnet, daß aus dem zweiten Teilstrahl des Lasers (26, 26′) ein dritter Teilstrahl abgeleitet ist, dessen Frequenz höher ist als diejenige der Signalwelle.

6. Sende/Empfangsteil nach Anspruch 4, dadurch gekennzeichnet, daß die frequenzverschiebende Komponente (27, 28; 27′, 28′) allein oder in Verbindung mit frequenzselektiven optischen Komponenten zur Modulation der Signalwelle verwendbar ist.

7. Sende/Empfangsteil nach Anspruch 3, dadurch gekennzeichnet, daß zwischen dem unidirektional emittierenden Laser (26′) und einer Vorrichtung (31) zur Strahlaufteilung ein optischer Isolator (32) angeordnet ist.

8. Sende/Empfangsteil nach einem der Ansprüche 4 bis 7, dadurch gekennzeichnet, daß die durch Frequenzverschiebungen von der Grundfrequenz ($f_0$) der vom Laser (26, 26′) emittierten Strahlung abgeleiteten Frequenzen ($f_1$, $f_2$, usw.) der Teilstrahlen unabhängig voneinander wählbar sind, jedoch gemeinsam durch eine Zwischenfrequenzregelung bezüglich einer Referenzfrequenz stabilisierbar sind.

9. Sende/Empfangsteil nach einem der Ansprüche 4 bis 8, dadurch gekennzeichnet, daß der zweite Teilstrahl mit einer zweiten Frequenz ($f_1$) für die Aussendung optischer Signale auf der zweiten Frequenz ($f_1$) und der erste Teilstrahl mit einer ersten Frequenz ($f_2$) für den optischen Überlagerungsempfang der Signalwelle verwendet wird.

10. Sende/Empfangsteil nach einem der Ansprüche 4 bis 8, dadurch gekennzeichnet, daß der zweite Teilstrahl mit einer zweiten Frequenz ($f_1$) zur optischen Verstärkung und der erste Teilstrahl mit einer ersten Frequenz ($f_2$) für den optischen Überlagerungsempfang der Signalwelle verwendet ist.

11. Sende/Empfangsteil nach Anspruch 10, dadurch gekennzeichnet, daß der zweite Teilstrahl mit der zweiten Frequenz ($f_1$) wechselweise zum Senden einer Signalwelle mit der zweiten Frequenz ($f_1$) und zur optischen Verstärkung der gegengerichteten Signalwelle eingesetzt ist.

## Claims

1. A transceiver for a bidirectional coherent optical transmission system comprising an optical waveguide as a transmission medium, a laser for emitting signal carrier wave, a modulator, a coherent optical heterodyne detector, and a demodulator, with the laser also used to emit oscillator radiation for the coherent optical heterodyne detector of the same transceiver,
   **characterized in**
   that it includes a first coupler (19, 19′) for coupling a first beam portion of the laser (26, 26′) into the coherent optical heterodyne detector (13, 13′) in the direction of the signal wave coming from a remote transceiver, and a second coupler (20, 20′) for coupling a second beam portion of the laser (26, 26′) into the optical waveguide (12, 12′) in a direction opposite to that of the signal wave coming from the remote transceiver.

2. A transceiver as claimed in claim 1, characterized in that the laser (26, 26′) is also used to optically amplify the signal wave incoming on the optical waveguide (12, 12′) from a remote transceiver (11, 11′).

3. A transceiver as claimed in claim 1 or 2, characterized in that the laser (26′) is a unidirectionally emitting laser whose beam can be divided into at least two separated portions.

4. A transceiver as claimed in any one of the preceding claims, characterized in that at least one frequency-shifting component (27, 28; 27′, 28′) is positioned in the path of the beam emitted by the laser (26, 26′) or in the paths of the portions of said beam.

5. A transceiver as claimed in any one of claims 2 to 4, characterized in that from the second beam portion of the laser (26, 26′), a third beam portion is derived whose frequency is higher than that of the signal wave.

6. A transceiver as claimed in claim 4, characterized in that the at least one frequency-shifting component (27, 28, 27′, 28′) is used, in conjunction with frequency-selective optical components if necessary, to modulate the signal wave.

7. A transceiver as claimed in claim 3, characterized in that an optical isolator (32) is interposed between the unidirectionally emitting laser (26′) and a beam splitter device (31).

8. A transceiver as claimed in any one of claims 4 to 7, characterized in that the frequencies ($f_1$, $f_2$, etc.) of the beam portions, which are derived from the fundamental frequency ($f_0$) of the laser radiation by frequency shifting, are selectable independently of each other but can be stabilized jointly by intermediate-frequency control with respect to a reference frequency.

9. A transceiver as claimed in any one of claims 4 to 8, characterized in that the second beam portion, having a second frequency ($f_1$), is used to transmit optical signals on the second frequency ($f_1$), and that the first beam portion, having a first frequency ($f_2$), is used for optical heterodyne detection of the signal wave.

10. A transceiver as claimed in any one of claims 4 to 8, characterized in that the second beam portion, having a second frequency ($f_1$), is used to optically amplify the signal wave, and that the first beam portion, having

a first frequency ($f_2$) is used for optical heterodyne detection of the signal wave.

11. A transceiver as claimed in claim 10, characterized in that the second beam portion, having the second frequency ($f_1$), is alternately used to transmit a signal wave having the second frequency ($f_1$) and to optically amplify the oppositely directed signal wave.

**Revendications**

1. Ensemble émetteur-récepteur pour un système de transmission optique bidirectionnel à ondes cohérentes, contenant comme instrument de transmission un guide d'ondes lumineuses, comportant un laser pour émettre une onde porteuse du signal et un modulateur, comportant un récepteur optique à superposition d'ondes cohérentes, et un démodulateur, le laser étant employé également pour émettre un faisceau oscillatoire pour le récepteur optique à superposition d'ondes cohérentes du même ensemble émetteur-récepteur,

caractérisé,

par le fait qu'il comporte un premier coupleur (19, 19′) pour coupler, dans le récepteur optique à superposition d'ondes cohérentes (13, 13′), un premier faisceau partiel du laser (26, 26′) en direction de l'onde porteuse du signal qui arrive d'un ensemble émetteur-récepteur éloigné et un second coupleur (2∅, 2∅′) pour coupler, dans le guide d'ondes lumineuses (12, 12′), un second faisceau partiel du laser (26, 26′) en direction opposée à celle de l'onde porteuse du signal qui arrive de l'ensemble émetteur-récepteur éloigné.

2. Ensemble émetteur-récepteur selon la revendication 1, caractérisé par le fait que le laser (26, 26′) est simultanément employé pour l'amplification optique de l'onde porteuse du signal qui arrive de l'ensemble émetteur-récepteur éloigné (11, 11′) par l'intermédiaire du guide d'ondes lumineuses (12, 12′).

3. Ensemble émetteur-récepteur selon la revendication 1 ou 2, caractérisé par le fait que le laser (26′) est un laser à émission unidirectionnelle dont le faisceau peut se diviser en au moins deux faisceaux partiels.

4. Ensemble émetteur-récepteur selon l'une des revendications précédentes, caractérisé par le fait que sur le chemin du faisceau émis par le laser (26, 26′) ou de ses faisceaux partiels, est disposé au moins un composant (27, 28; 27′, 28′) décalant en fréquence.

5. Ensemble émetteur-récepteur selon l'une des revendications 2 à 4, caractérisé par le fait que du second faisceau partiel du laser (26, 26′) on fait dériver un troisième faisceau partiel dont la fréquence est supérieure à celle de l'onde porteuse du signal.

6. Ensemble émetteur-récepteur selon la revendication 4, caractérisé par le fait que le composant (27, 28, 27′, 28′) décalant en fréquence peut s'employer seul ou en liaison avec des composants optiques, sélectifs en fréquence, pour la modulation de l'onde porteuse du signal.

7. Ensemble émetteur-récepteur selon la revendication 3, caractérisé par le fait qu'entre le laser (26′) à émission unidirectionnelle et un dispositif (31) de division du faisceau est disposé un isolateur optique (32).

8. Ensemble émetteur-récepteur selon l'une des revendications 4 à 7, caractérisé par le fait que les fréquences ($f_1$, $f_2$, etc.) des faisceaux partiels, dérivées par décalage de fréquence par rapport à la fréquence de base ($f_0$) du faisceau émis par le laser (26, 26′) peuvent être choisies indépendantes l'une de l'autre, mais qu'elles peuvent toutefois être stabilisée en commun par une régulation de fréquence intermédiaire par rapport à un fréquence de référence.

9. Ensemble émetteur-récepteur selon l'une des revendications 4 à 8, caractérisé par le fait que le second faisceau partiel est employé avec une seconde fréquence ($f_1$) pour l'émission de signaux optiques sur la seconde fréquence ($f_1$) et que le premier faisceau partiel est employé avec une première fréquence ($f_2$) pour la réception optique, par superposition d'ondes cohérentes, de l'onde porteuse du signal.

10. Ensemble émetteur-récepteur selon l'une des revendications 4 à 8, caractérisé par le fait que le second faisceau partiel est employé avec une seconde fréquence ($f_1$) pour l'amplification optique et que le premier faisceau partiel est employé avec une première fréquence ($f_2$) pour la réception optique, par superposition d'ondes cohérentes, de l'onde porteuse du signal.

11. Ensemble émetteur-récepteur selon la revendication 10, caractérisé par le fait que le second faisceau partiel est employé avec la seconde fréquence ($f_1$) alternativement pour émettre une onde porteuse du signal à la seconde fréquence ($f_1$) et pour l'amplification optique de l'onde porteuse du signal envoyée en direction opposée.

Fig. 1:

Fig. 2:

a)

b)

c)

Fig. 3